Europäisches Patentamt

European Patent Office

Office européen des brevets

(19)

(11) Veröffentlichungsnummer : **0 519 100 B1**

(12) # EUROPÄISCHE PATENTSCHRIFT

(45) Veröffentlichungstag der Patentschrift :
**08.02.95 Patentblatt 95/06**

(51) Int. Cl.⁶ : **H02P 5/40,** H02P 7/62

(21) Anmeldenummer : **91110106.1**

(22) Anmeldetag : **19.06.91**

(54) **Verfahren und Einrichtung zum Begrenzen einer physikalischen Grösse, vorzugsweise einer elektrischen Spannung.**

(43) Veröffentlichungstag der Anmeldung :
**23.12.92 Patentblatt 92/52**

(45) Bekanntmachung des Hinweises auf die
Patenterteilung :
**08.02.95 Patentblatt 95/06**

(84) Benannte Vertragsstaaten :
**AT CH DE FR GB IT LI**

(56) Entgegenhaltungen :
**FR-A- 2 390 041**

(56) Entgegenhaltungen :
**US-A- 4 885 518**
**PATENT ABSTRACTS OF JAPAN, vol. 8, no.
213 (E-269)(1650) 28. September 1984 & JP-
A-59 096 889 ( TOSHIBA K.K. ) 4. Juni 1984**

(73) Patentinhaber : **SIEMENS
AKTIENGESELLSCHAFT
Wittelsbacherplatz 2
D-80333 München (DE)**

(72) Erfinder : **Segger, Bernd, Ing. grad.
Isarstrasse 4/III
W-8520 Erlangen (DE)**

EP 0 519 100 B1

## Beschreibung

Die Erfindung bezieht auf ein Verfahren zum Begrenzen einer physikalischen Größe, vorzugsweise einer elektrischen Spannung, hinsichtlich ihres Betrages auf einen Grenzwert, wobei sich die Größe durch eine vektorielle Addition einer ersten und eine zur ersten um 90° versetzten zweiten Hilfsgröße ergibt und wobei jede der Hilfsgrößen hinsichtlich ihres jeweiligen Betrages auf den Grenzwert begrenzt wird.

Ein derartiges Verfahren wird beispielsweise bei einer handelsüblichen feldorientierten Stromregelung im Läuferkoordinatensystem von Drehfeldmaschinen verwendet. Bei den beiden Hilfsgrößen handelt sich dabei um Komponenten $U_d$ und $U_q$ eines ruhenden Spannungszeigers $U_R$. Dieser Zeiger bestimmt nach einer weiteren Verarbeitung die Strangspannung für den zu speisenden Motor. Die beiden Komponenten $U_d$ und $U_q$ werden durch zwei unabhängige Regler vorgegeben. Im Interesse einer möglichst geringen Welligkeit des Motor-Strangstroms ist es nun wünschenswert, daß für jede beliebige Paarung der beiden Komponenten $U_d$ und $U_q$ stets sichergestellt ist, daß der Betrag des resultierenden Spannungszeigers $U_R$ nicht größer als ein Grenzwert $U_{max}$ wird.

Prinzipiell müßte dazu der resultierende Spannungszeiger $U_R$ innnerhalb eines Arbeitsbereiches mit dem Radius $U_{max}$ gehalten werden. Dies könnte dadurch erreicht werden, daß zum einen die erste Hilfsgröße $U_d$ auf das Einhalten des Grenzwerts $U_R$ überwacht wird und daß zum zweiten die zweite Hilfsgröße $U_q$ dahingehend begrenzt wird, daß die durch die folgende Gleichung beschriebene Beziehung nicht überschritten wird.

$$U_q = SQR (U_{max}^2 - U_d^2)$$

Eine solche Begrenzung erfordert jedoch zwei Vierquadrantenmultiplizierer und einen Radizierer, was dazu führt, daß diese Überwachung sehr aufwendig wird, wenn dazu auch noch davon auszugehen ist, daß Einrichtungen zum Stromregelungen bei Drehfeldmaschinen hochdynamisch arbeiten müssen.

Bei üblichen Verfahren der eingangs genannnten Art wird daher toleriert, daß die beiden Hilfsgrößen jeweils nur für sich darauf überwacht werden, daß der Grenzwert $U_{max}$ nicht überschritten wird. Für den ungünstigsten Fall, daß jede der beiden Hilfsgrößen $U_d$ und $U_q$ jeweils den Grenzwert erreicht, bedeutet dies allerdings für die resultierende Größe $U_R$, daß diese hierbei den eigentlich angestrebten Grenzwert um mehr als 40% überschreitet.

Aufgabe der Erfindung ist es, ein Verfahren der eingangs genannten Art so auszubilden, daß für alle Kombinationen der Hilfsgroßen $U_d$ und $U_q$ sichergestellt ist, daß die resultierende Größe $U_R$ einen angestrebten Grenzwert $U_{max}$ möglichst genau einhält, ohne daß dazu komplizierte Operationen, wie beispielsweise das Radizieren, erforderlich sind.

Gemäß der Erfindung wird diese Aufgabe dadurch gelöst, daß für mindestens einen zusätzlichen Winkelwert die zweite Hilfsgröße auch noch so begrenzt wird, daß ein Differenzwert nicht überschritten wird, dessen Minuend durch den Betrag des Quotienten aus dem Grenzwert und dem Sinus des Winkelwertes und dessen Subtrahend durch den Betrag aus dem Quotienten des Wertes der ersten Hilfsgröße und dem Tangens des Winkelwertes gegeben ist. Mit jedem zusätzlichen Winkelwert wird damit eine begrenzende Tangente an den optimalen Überwachungskreis gelegt. Jede Tangente kann jeweils durch eine lineare Gleichung beschrieben werden, die mit Hilfe einiger weniger Umsetzvorgänge leicht nachvollzielbar ist.

Eine erste vorteilhafte Ausbildung der Erfindung ist dadurch gekennzeichnet, daß außer dem jeweiligen zusätzlichen Winkelwert auch noch die zu diesem cartesisch gelegenen Winkelwerte verwendet werden. Damit sind auch für einen Vierquadrantenbetrieb gleichförmige Verhältnisse sichergestellt.

Eine weitere vorteilhafte Ausbildung der Erfindung ist dadurch gekennzeichnet, daß als zusätzlicher Winkelwert ein Winkel von 45° vorgesehen ist. Als überwachter Raum ergibt sich damit ein den idealen Überwachungkreis umgrenzendes Achteck, wodurch selbst im umgüstigsten Fall die resuzltierende Größe $U_R$ nur um 8% den angestrebten Grenzwert $U_{max}$ überschreitet. Eine solche Überschreitung erweist sich in der Praxis jedoch als unkritisch. Bedarfsweise könnte jedoch auch der Grenzwert $U_{max}$ noch zusätzlich so reduziert werden, daß das Überwachungsfeld sozusagen ein Achteck beschriebe, dessen Kanten stets innerhalb des idealen Überwachungsraumes liegen würden.

Die Erfindung bezieht sich ferner auf eine Einrichtung zur Durchführung des Verfahrens nach einem der vorstehenden Ansprüche, die so ausgebildet sein soll, daß zur Realisierung mit möglichst wenigen, technisch einfachen Elementen ausgekommen werden kann.

Dies wird dadurch ermöglich, daß die erste Hilfsgröße einem ersten Begrenzer zugeleitet wird, der sicherstellt, daß der Betrag der ersten Hilfsgröße den vorgegebenen Grenzwert nicht überschreitet, sodaß am Ausgang des ersten Begrenzers das gegebenenfalls begrenzte erste Hilfssignal vorliegt, daß das gegebenenfalls begrenzte erste Hilfssignal ferner einem Betragsbildner zuleitbar ist, der es zusätzlich mit einem Faktor bewertet, der dem Betrag des Cotangens des jeweiligen zusätzlichen Winkelwertes entspricht, daß das solchermaßen resultierende Signal an den ersten Eingang eines Subtrahiergliedes geschaltet ist, dessen zweiter Eingang mit einem Signal beaufschlagt ist, das dem Betrag des Quotienten aus dem Grenzwert und dem Sinus des jeweiligen zusätzlichen Winkelwertes entspricht, daß mit einem zweiten Begrenzer das Ausgangssignal des Subtrahierglieds dahingehend überwachtbar ist, daß er den Grenzwert nicht überschreitet und daß das Ausgangssignal am zweiten Begrenzer sowie dessen über einen Inverter invertiertes Signal die Grenzwerte für einen dritten Begrenzer vorgeben, dem eingangsseitig das zweite Hilfssignal zugeleitet wird und am dessen Ausgang das gegebenenfalls begrenzte zweite Hilfssignal vorliegt.

Ein Ausführungsbeispiel der Erfindung ist in der Zeichnung dargestellt und wird im folgenden näher erläutet.

Dabei zeigen:

FIG 1 bis 3    signifikante Diagramme und

FIG 4    ein Blockschaltbild

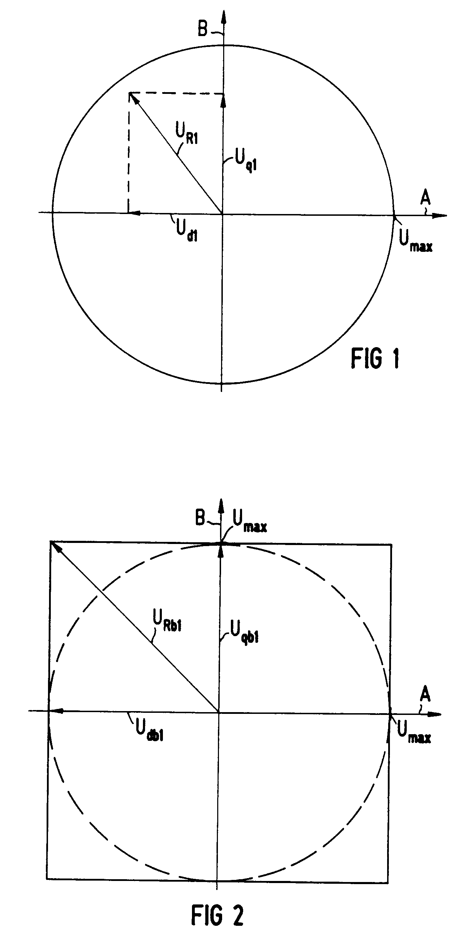

In der Darstellung gemäß FIG 1 ist ein erstes Diagramm gezeigt, das zwei cartesische Achsen A und B aufweist, wobei in Richtung der Achse A eine erste Hilfsgröße als erste Spannung $U_d$ und in Richtung der zweiten Achse B eine zweite Hilfsgröße als zweite Spannung $U_q$ vorliegen, wobei sich aus der vektoriellen Addition der beiden Hilfsgrößen als resultierende Größe eine Spannung $U_R$ ergibt. Im zunächst betrachteten Ausführungsbeispiel sind dabei Spannungen $U_{d1}$ und $U_{q1}$ als erste und zweite Spannung angenommen, die gemeinsam eine resultierende Spannung $U_{r1}$ ergeben, wie die dabei vorliegende vektorielle Addition durch gestrichelnde Hilfslinien zeigt. Das Ziel einer Überwachung soll dabei sein, daß ein Wert $U_{max}$ für alle Kombinationen der beiden Hilfsgröße nicht überschritten wird. Der ideale Überwachungsraum beschreibt damit einen Kreis, wie er in der Darstellung gemäß FIG 1 gezeigt ist.

In der Darstellung gemäß FIG 2 sind ebenfalls die Achsen A und B angenommen und auch der resultierende Überwachungskreis ist dargestellt, allerdings wird er hier nur durch eine gestreichlte Linie angedeutet, da in der Darstellung gemäß FIG 2 ein vereinfachtes handelsübliches Überwachungskonzept beschrieben werden soll. Dabei wird nämlich jede der Hilfsgröße $U_d$ bzw. $U_b$ für sich nur daraufhin überwacht, ob sie den Grenzwert $U_{max}$ überschreitet. Dies führt sozusagen zu einem quadratischen Überwachungsraum und ziegt dies Beispiel, bei dem beide zu überwachenden Hilfsgrößen jeweils den Grenzwert $U_{max}$ erreichen, wobei die erste Spannung $U_d$ und die zweite Spannung $U_q$ dann als jeweils begrenzte erste bzw. zweite begrenzte Spannung $u_{db1}$ bzw. $U_{qb1}$ vorliegen, daß die resultierende begrenzte Spannung $U_{rb1}$ um 40% den angestrebten Wert $U_{max}$ überschreitet.

Hier setzt die Erfindung ein, denn hierbei wird der quadratische Überwachungsraum zu einem polygonalen Überwachungsraum verfeinert, um eine Annährung an die optimale Kreisform für das Überwachungsfeld zu erreichen. Im folgenden Ausführungsbeispiel wird dabei ein achteckiger Überwachungsraum beschrieben, bedarfsweise könnte allerdings auch ein zwölfeckiger, sechszehneckiger usw. Überwachungsraum vorgesehen sein.

Die Achteckform wird dadurch erreicht, daß für einen Winkel phi von 45° eine Tangente an den idealen Überwachungsraum (gestrichelt dargestellt) gelegt wird, die eine Begrenzungsgerade BG1 darstellt. Weitere Begrenzungsgraden BG2, BG3 und BG4 ergeben sich für Winkel von 135°, 225° bzw. 315°.

Es sei für die folgende Betrachtung angenommen, daß die erste Hilfsgröße als erste Spannung $U_{d2}$ vorliegt und die zweite Hilfsgröße als zweite Spannung $U_{q2}$ vorliegt. Eine resultierende Spannung würde damit wie gestrichelnd angedeutet, außerhalb des achteckigen Überwachungsraumes verlaufen. Gemäß der Erfindung wird daher die zweite Spannung $U_{q2}$ auf eine Spannung $U_{qb2}$ begrenzt, sodaß die resultierende Spannung $U_{rb2}$ das Überwachungsachteck nicht überschreitet.

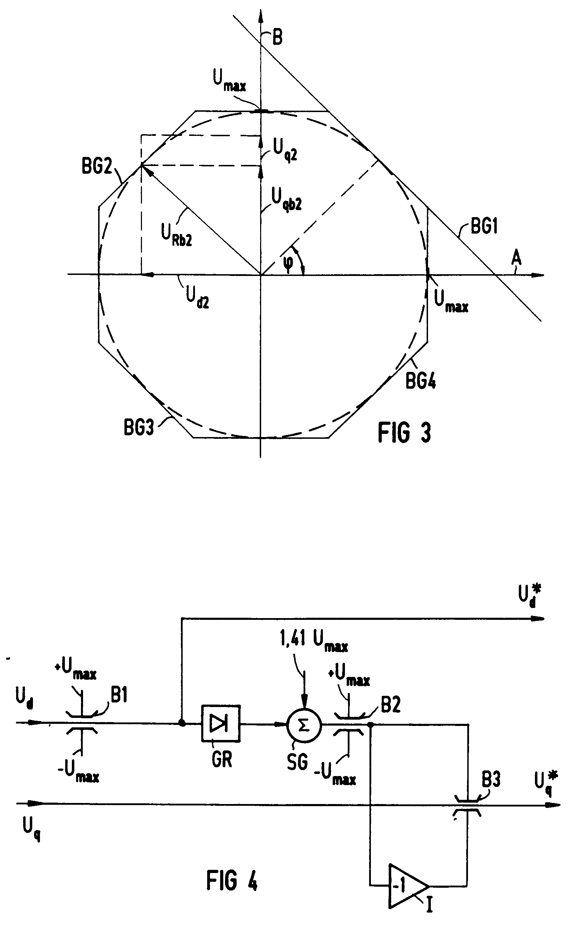

Eine einfache schaltungsmäßige Realisierung der Erfindung ist in der Darstellung gemäß FIG 4 in Form eines Blockschaltbildes dargestellt. Die erste Spannung $U_d$ wird zunächst über einen Begrenzer B1 geleitet, der sicherherstellt, daß die angenommenen Grenzwerte $+ U_{max}$ bzw. $- U_{max}$ nicht überschritten werden. Damit liegt am Ausgang des Begrenzers B1 eine gegebenenfalls begrenzte erste Spannung $U^*_d$ vor, die in der Übersichtlichkeit halber nicht weiter dargestellten Verarbeitungseinrichtungen weiter verarbeit werden kann. Die gegebenenfalls begrenzte erste Spannung $U^*_d$ wird jedoch ferner einem Gleichrichter GR Zugeleitet und das Ausgangssignal des Gleichrichters GR gelangt an einen invertierenden Eingang eines Subtrahiergliedes SG, an dessen zweitem Eingang ein Signal vorliegt, daß dem 1,41-fachen Wert der Maximalspannung $U_{max}$ entspricht. Es wird dabei also von einem Winkel phi von 45° ausgegangen. Das Ausgangssignal des Subtrahierglieds SG gelangt dann an einem Begrenzer B2, der sicherstellt, daß dieses Ausgangssignal den Grenzwert $U_{max}$ sowohl in positiver als auch in negativer Richtung nicht überschreitet. Ferner bestimmt das Ausgangssignal des Subtrahiergliedes SG die Schwellen eines Begrenzers B3 in positiver Richtung bzw. über einen Inverter I in negativer Richtung. Dieser Begrenzer B3 ist in den Signalpfad für die zweite Spannung $U_q$ geschaltet. Am Ausgang des Begrenzers B3 liegt dann die zweite Hilfsgröße in gegebenenfalls begrenzter Form als $U^*_q$ vor und kann dann ebenfalls in den der Übersichtlichkeit halber nicht dargestellten Verarbeitungseinrichtungen weiter verarbeit werden.

**Patentansprüche**

1. Verfahren zum Begrenzen einer physikalischen Größe, (U$_R$) vorzugsweise einer elektrischen Spannung, hinsichtlich ihres Betrages auf einen Grenzwert (U$_{max}$), wobei sich die Größe (U$_R$) durch eine vektorielle Addition einer ersten (U$_{d1}$) und einer zur ersten um 90° versetzten zweiten Hilfsgröße (U$_{q2}$) ergibt und wobei jede der Hilfsgrößen (U$_{d1}$,U$_{q2}$) hinsichtlich ihres jeweiligen Betrages auf den Grenzwert begrenzt wird, **dadurch gekennzeichnet**, daß für mindestens einen zusätzlichen Winkelwert des Winkels (phi) zwischen den Vektoren der Größe (U$_R$) und der ersten Hilfsgröße (U$_{d1}$) die zweite Hilfsgröße (U$_{q2}$) auch noch so begrenzt wird, daß ein Differenzwert nicht überschritten wird, dessen Minuend durch den Betrag des Quotienten aus dem Grenzwert (U$_{max}$) und dem Sinus des Winkelwertes (phi) und dessen Subtrahend durch den Betrag aus dem Qotienten des Wertes des ersten Hilfsgröße (U$_{d1}$) und den Tangens des Winkelwertes (phi) gegeben ist.

2. Verfahren nach Anspruch 1, **dadurch gekennzeichnet**, daß außer dem jeweiligen zusätzlichen Winkelwert (phi) auch noch die zu diesem cartesisch gelegenen Winkelwerte verwendet werden.

3. Verfahren nach Anspruch 1 oder 2, **dadurch gekennzeichnet**, daß als zusätzlicher Winkelwert ein Winkel von 45° vorgesehen ist.

4. Einrichtung zur Durchführung des Verfahrens nach einem der vorstehenden Ansprüche, **dadurch gekennzeichnet**, daß die erste Hilfsgröße (U$_d$) einem ersten Begrenzer (B1) zugeleitet wird, der sicherstellt, daß der Betrag der ersten Hilfsgröße den vorgegebenen Grenzwert (U$_{max}$) nicht überschreitet, sodaß am Ausgang des ersten Begrenzers (B1) das gegebenenfalls begrenzte erste Hilfssignal (U$_d$*) vorliegt, daß das gegebenenfalls begrenzte erste Hilfssignal (U*$_d$) ferner einem Betragsbildner (GR) zuleitbar ist, der es zusätzlich mit einem Faktor bewertet, der dem Betrag des Cotangens des jeweiligen zusätzlichen Winkelwertes (phi) entspricht, daß das solchermaßen resultierende Signal an den ersten Eingang eines Subtrahierglieds (SG) geschaltet ist, dessen zweiter Eingang mit einem Signal beaufschlagt ist, das dem Betrag des Quotienten aus dem Grenzwert (U$_{max}$) und dem Sinus des jeweiligen zugehörigen Winkelwertes (phi) entspricht, daß mit einem zweiten Begrenzer (B2) das Ausgangssignal des Subtrahierglieds (SG) dahingehend überwachbar ist, daß es den Grenzwert (U$_{max}$) nicht überschreitet und daß das Ausgangsignal am zweiten Begrenzer (B2) sowie dessen über einen Inverter (I) invertiertes Signal die Grenzwerte für einen dritten Begrenzer (B3) vorgeben, dem eingangsseitig das zweite Hilfssignal (U$_d$) zugeleitet wird und an dessen Ausgang das gegebenenfalls das begrenzte zweite Hilfssignal (U*$_q$) vorliegt.

**Claims**

1. A method of limiting a physical quantity (U$_R$), preferably an electrical voltage, in terms of its amount to a limit value (U$_{max}$), where the quantity (U$_R$) is obtained by vectorial addition of a first auxiliary quantity (U$_{d1}$) and a second auxiliary quantity (U$_{q2}$) offset relative to the first auxiliary quantity by 90° and where each of the auxiliary quantities (U$_{d1}$, U$_{q2}$) is limited to the limit value in terms of its respective amount, characterised in that for at least one additional angular value of the angle (phi) between the vectors of the quantity (U$_R$) and the first auxiliary quantity (U$_{d1}$) the second auxiliary quantity (U$_{q2}$) is additionally limited in such manner that a differential value is not exceeded, the minuend of which is defined by the amount of the quotient of the limit value (U$_{max}$) and the sine of the angular value (phi) and the subtrahend of which is defined by the amount of the quotient of the value of the first auxiliary quantity (U$_{d1}$) and the tangent of the angular value (phi).

2. A method as claimed in Claim 1, characterised in that in addition to the respective, additional angular value (phi) the related cartesian angular values are also used.

3. A method as claimed in Claim 1 or 2, characterised in that an angle of 45° is provided as additional angular value.

4. A device for the implementation of the method claimed in one of the above claims, characterised in that the first auxiliary quantity (U$_d$) is fed to a first limiter (B1) which ensures that the amount of the first auxiliary quantity does not exceed the predetermined limit value (U$_{max}$) so that the optionally limited, first auxiliary signal (U$_d$*) occurs at the output of the first limiter (B1), that the optionally limited, first auxiliary signal (U*$_d$) can also be fed to an absolute-value generator (GR) by which it is additionally weighted with a factor corresponding to the amount of the cotangent of the respective additional angular value (phi), that the resultant signal is switched to the first input of a subtracter (SG), the second input of which is supplied with a signal which corresponds to the amount of the quotient of the limit value ($U_{max}$) and the sine of the respective associated angular value (phi), that with a second limiter (B2) the output signal of the subtracter (SG) can be monitored to determine that it does not exceed the limit value ($U_{max}$) and that the output signal of the second limiter (B2) and its signal inverted via an inverter (I) predetermine the limit values for a third limiter (B3) which is supplied at its input end with the second auxiliary signal ($U_d$) and at the output of which the optionally limited, second auxiliary signal ($U^*_q$) occurs.

**Revendications**

1. Procédé de limitation d'une grandeur physique ($U_R$), de préférence une tension électrique, quant à sa valeur, à une valeur limite ($U_{max}$), selon lequel la grandeur ($U_R$) est obtenue par une addition vectorielle d'une première grandeur auxiliaire ($U_{d1}$) et d'une deuxième grandeur auxiliaire ($U_{q2}$) décalée de 90∅ par rapport à la première, et selon lequel chacune des grandeurs auxiliaires ($U_{d1}$, $U_{q2}$) est limitée quant à sa valeur respective à la valeur limite ($U_{max}$), caractérisé par le fait que pour au moins une valeur angulaire supplémentaire de l'angle (phi) entre les vecteurs de la grandeur ($U_R$) et de la première grandeur auxiliaire ($U_{d1}$), la deuxième grandeur auxiliaire ($U_{q2}$) est encore aussi limitée, de telle sorte que ne soit pas dépassée une valeur de différence, dont le terme duquel on soustrait est donné par la valeur du quotient de la valeur limite ($U_{max}$) par le sinus de la valeur de l'angle (phi) et dont le terme à soustraire est donné par la valeur du quotient de la valeur de la première grandeur auxiliaire ($U_{d1}$) par la tangente de la valeur de l'angle (phi).

2. Procédé selon la revendication 1, caractérisé par le fait qu'à part la valeur angulaire supplémentaire (phi), les valeurs angulaires cartésiennes par rapport à celle-ci sont aussi utilisées.

3. Procédé selon la revendication 1 ou 2, caractérisé par le fait que l'on prévoit, en tant que valeur angulaire supplémentaire, un angle de 45°.

4. Dispositif pour la mise en oeuvre du procédé selon l'une des revendications précédentes, caractérisé par le fait que la première grandeur auxiliaire ($U_d$) est transmise à un premier limiteur (B1) qui assure que la valeur de la première grandeur auxiliaire ne dépasse pas la valeur limite donnée ($U_{max}$), de sorte que le premier signal auxiliaire ($U_d^*$), éventuellement limité, est présent en sortie du premier limiteur (B1), que le premier signal auxiliaire ($U^*_d$), éventuellement limité, peut être ensuite transmis à un formateur de valeur (GR) qui le pondère en plus d'un facteur qui correspond à la valeur de la cotangente de la valeur angulaire (phi) supplémentaire respective, que le signal qui en résulte est connecté à la première entrée d'un soustracteur (SG) à la deuxième entrée duquel est appliqué un signal qui correspond à la valeur du quotient de la valeur limite ($U_{max}$) par le sinus de la valeur angulaire (phi) supplémentaire associée respective, que le signal de sortie du soustracteur (SG) peut ensuite être contrôlé par un deuxième limiteur (B2), de sorte qu'il ne dépasse pas la valeur limite ($U_{max}$), et que le signal de sortie du deuxième limiteur (B2) ainsi que son signal inversé grâce à un inverseur (I) donnent la valeur limite pour un troisième limiteur (B3) auquel le deuxième signal auxiliaire ($U_d$) est transmis en entrée et à la sortie duquel le deuxième signal auxiliaire ($U^*_q$), éventuellement limité, est présent.

EP 0 519 100 B1

FIG 1

FIG 2

FIG 3

FIG 4